# EUROPEAN PATENT SPECIFICATION

(11) **EP 4 214 256 B1**
(45) Date of publication and mention of the grant of the patent: **11.09.2024**
(21) Application number: 21795060.9
(22) Date of filing: 17.09.2021
(51) Int. Cl.: C08G 18/10, C08G 18/42, C08G 18/66, C08G 18/48, C08G 18/76, C08G 18/32, C09J 175/08, C08G 18/20, C09J 175/06

(54) **LOW FREE POLYURETHANE PREPOLYMER COMPOSITION FOR REACTIVE HOT MELT ADHESIVES**
PRÄPOLYMERZUSAMMENSETZUNG MIT NIEDRIGEM FREIEM POLYURETHANGEHALT FÜR REAKTIVE SCHMELZKLEBSTOFFE
COMPOSITION POLYURÉTHANE À FAIBLE TENEUR EN POLYURÉTHANE POUR DES ADHÉSIFS THERMOFUSIBLES RÉACTIFS

(30) Priority: 18.09.2020 US 202063080145 P
(43) Date of publication of application: 26.07.2023
(73) Proprietor: LANXESS Corporation, Pittsburgh, PA 15275-1112 (US)
(72) Inventor: EMANUEL, Ronald M. Jr., Morris, CT 06763 (US); YUAN, Tingting, Cheshire, CT 06410 (US); RASMUSON, Matthew Joseph, Waterbury, CT 06705 (US)
(74) Representative: Bohrn, Ulrich Thomas
(86) International application number: PCT/US2021/050835
(87) International publication number: WO 2022/061087

(56) References cited:
- EP-A1- 1 746 117
- EP-A2- 0 455 400
- US-A1- 2013 190 461
- US-A1- 2016 046 845

## Description

The present invention relates to a reactive polyurethane prepolymer composition, which can be used as a hot melt adhesive, comprising a first polyurethane prepolymer which is the reaction product of the reaction of methylene diphenyl diisocyanate (MDI) with poly(1,6-hexamethylene adipate) glycol (PHAG) with a molecular weight (Mw) of 500 g/mol to 10,000 g/mol and with an NCO content of 0.5 wt% to 7 wt%, preferably of 3 wt% to 7 wt% and more preferably of 5 wt% to 7 wt%, comprising less than 0.1 wt% free MDI monomer based on the total weight of the first polyurethane prepolymer, a second polyurethane prepolymer which is the reaction product of the reaction of methylene diphenyl diisocyanate with polypropylene glycol (PPG) or a succinic acid based polyester polyol with a molecular weight (Mw) of 250 g/mol to 4,000 g/mol and with an NCO content of 0.5 wt% to 12 wt%, preferably of 3 wt% to 11 wt% and more preferably of 5 wt% to 10 wt%, comprising less than 0.1 wt% free MDI monomer based on the total weight of the second polyurethane prepolymer, and optionally one or more catalysts, as well as a process for producing said reactive polyurethane prepolymer composition, a method for adhesively joining or sealing two substrates and the use as an hot melt adhesive.

### BACKGROUND OF THE INVENTION

Isocyanate terminated polyurethane prepolymers are commonly used to produce adhesives such as reactive hot melt adhesives (HMA). These adhesives consist primarily of isocyanate terminated polyurethane prepolymers, which are conventionally obtained by reacting polyols with isocyanates, that react with surface or ambient moisture through diffusion into the adhesive in order to chain-extend, forming an irreversible new polyurethane/urea polymer.

Due to stricter regulatory restrictions, producers of hot melt adhesives have to take measure to reduce the amount of free diisocyanate monomers in the hot melt adhesive formulations. Beside the regulatory requirements, reactive hot melt adhesives strive to fulfill several other requirements such as, for example, easy processing, low viscosity, high cure speed and high adhesive strength. In particular, it is desirable to have a high lap shear strength after a short cure time.

Many hot melt adhesive formulations based on polyurethane prepolymers are known in the prior art.

EP-A-0827995 discloses hot melt adhesives comprising a polyisocyanate prepolymer prepared by reacting a polyisocyanate with a functionality of at least 2 with a polyol with a functionality of at least 2, the reaction product comprising at least 90 wt% "perfect" prepolymer and less than 2 wt% unreacted polyisocyanate monomer and the prepolymer having an NCO content ranging from 0.2 to 8 wt%. This document teaches the benefits of high amount of prefect prepolymers of more than 90 wt%.

WO-A-01/040340 discloses polyurethane compositions having a low level of monomeric diisocyanates that can be prepared in a two-stage process wherein a diol component having a molecular weight of less than 2000 g/mol and a monomeric diisocyanate having a molecular weight of less than 500 g/mol are reacted in a first step. A molar ratio of MDI:polyol of 5:1 to 10:1 is preferred, as it favors the formation of a final prepolymer (after removal of solvent and free MDI monomer) with an NCO content at least about 80% of the theoretical NCO content for a pure ABA structure. The resulting low-monomer macromolecular diisocyanate is reacted in a second step with a polyol to form a reactive prepolymer having isocyanate end groups. Such polyurethane compositions are said to be useful as binders for reactive one- or two-component adhesive/sealant materials, which may be solvent containing, and also, provided the polyols are chosen appropriately, for preparing reactive hot melts.

US-B-6,866,743 discloses prepolymer composition based on MDI or TDI consisting essentially of at least 80 wt% perfect prepolymers and less than 2 wt% free MDI monomer suitable for use in non-structural polyurethane adhesive compositions.

US-B-6,884,904 discloses an MDI/polypropylene polyether prepolymer composition consisting essentially of at least 80 wt% perfect prepolymers and less than 2 wt% free MDI monomer suitable for use in polyurethane adhesive compositions. Polyurethane prepolymer compositions comprising less than 80 wt% perfect prepolymer and less than 1.0 wt% residual diisocyanate monomer are not disclosed.

US-A-2004/259968 discloses a composition comprising at least one reaction product of polyols with a stoichiometric excess of mixtures of asymmetrical polyisocyanates having a molecular weight below 600 g/mol and an NCO functionality from 1.75 to 2.5 and high molecular weight polyisocyanates. In a non-inventive comparison example, a prepolymer based on 4,4'-MDI and PPG-750 in a ratio of 5:1 with a residual amount of monomeric MDI of <0.1 wt% is disclosed.

US 2013/190461 A1 discloses polyurethane hot melt adhesive comprising an isocyanate-functional prepolymer having a low content of free monomeric polyisocyanates. The prepolymer is based on PPG and MDI and has a NCO content of 5.9 wt.-% and comprises monomeric polyisocyanates in an amount of less than 0.1 wt.-%. PHAG is used as NCO reactive polyol.

Typically, sophisticated production processes are employed to produce reactive hot melt adhesives with low amounts of free diisocyanate monomers.

Prepolymers with low amounts of diisocyanate monomers can be produced in various processes:
a) Removal of free monomeric diisocyanates via thin-film or short path distillation. This technique can be used for diisocyanates with NCO-groups of the same or different reactivity. In addition, an entrainer can be also used.
b) Usage of diisocyanates with NCO-groups of different reactivity or NCO-groups with the same reactivity and specifically selected stoichiometric ratios, e.g. molar ratios of NCO-groups to NCO-reactive groups below 2:1 and/or optionally specific catalysis.
c) Combination of processes a) and b), e.g. in a way that the amount of free monomeric diisocyanate is reduce with process b) to a certain extent and, then, it is further reduced with process a).

In an established multi-step approach to generate a low monomer hot melt adhesive product, 2,4'- and 4,4'-MDI isomers are mixed together with polyester polyol (such as PHAG) in a first step to provide a first conventional MDI prepolymer (>1wt%) with an NCO content of about 5 to 15 wt%. In a second step, said first conventional MDI prepolymer is mixed with a polyol to provide a so called "Hot Melt Prepolymer" with a low residual MDI monomer content of <0.10 wt% and a low NCO content of <1.0 wt%. Optionally additives are added as well. In a third step, said "Hot Melt Prepolymer" is then mixed with a second MDI prepolymer with an NCO content of approximately 6 wt% and <0.15 wt% free MDI monomer to provide a so called "Final Hot Melt". The resulting "Final Hot Melt" has a low MDI monomer content of <0.1 wt% and an NCO content of >1.0 wt%. This approach is disadvantageous, as it provides less flexibility by using a conventional prepolymer, tailoring of the viscosity of the final hot melt is difficult, high levels of industrial hygiene management are required during formulation and intensive analytic quality control is needed to ensure <0.1 wt% free MDI monomer content in the hot melt adhesive formulation.

In view of the prior art, there still remains a need for improvements in reactive hot melt adhesive technology. It becomes evident that there is a need for hot melt adhesives with a low amount of free diisocyanate monomers which forms a good adhesive bond with high tensile strength, provides a low NCO content, a low viscosity and short initial bond times (e.g. high crystallinity and solidifies quickly). The present invention addresses this need.

It has been now surprisingly found, that the reactive hot melt adhesive of the present invention overcomes the obstacles of the prior art.

### SUMMARY OF THE INVENTION

The present invention relates to a reactive polyurethane prepolymer composition comprising:
(a) a first polyurethane prepolymer which is the reaction product of the reaction of methylene diphenyl diisocyanate (MDI) with poly(1,6-hexamethylene adipate) glycol (PHAG) with a molecular weight (Mw) of 500 g/mol to 10,000 g/mol and with an NCO content of 0.5 wt% to 7 wt%, preferably of 3 wt% to 7 wt% and more preferably of 5 wt% to 7 wt%, comprising less than 0.1 wt% free MDI monomer based on the total weight of the first polyurethane prepolymer,
(b) a second polyurethane prepolymer which is the reaction product of the reaction of methylene diphenyl diisocyanate (MDI) with polypropylene glycol (PPG) or a succinic acid based polyester polyol with a molecular weight (Mw) of 250 g/mol to 4,000 g/mol and with an NCO content of 0.5 wt% to 12 wt%, preferably of 3 wt% to 11 wt% and more preferably of 5 wt% to 10 wt%, comprising less than 0.1 wt% free MDI monomer based on the total weight of the second polyurethane prepolymer, and
(c) optionally one or more catalysts.

The invention further relates to a process for producing said reactive polyurethane prepolymer composition of the invention, comprising the steps of:
(i) providing a first polyurethane prepolymer which is the reaction product of the reaction of MDI with poly(1,6-hexamethylene adipate) glycol with a molecular weight (Mw) of 500 g/mol to 10,000 g/mol and with an NCO content of 0.5 wt% to 7 wt%, preferably of 3 wt% to 7 wt% and more preferably of 5 wt% to 7 wt%, comprising less than 0.1 wt% free MDI based on the total weight of the first polyurethane prepolymer,
(ii) providing a second polyurethane prepolymer which is the reaction product of the reaction of methylene diphenyl diisocyanate (MDI) with polypropylene glycol (PPG) or a succinic acid based polyester polyol with a molecular weight (Mw) of 250 g/mol to 4,000 g/mol and with an NCO content of 0.5 wt% to 12 wt%, preferably of 3 wt% to 11 wt% and more preferably of 5 wt% to 10 wt%, comprising less than 0.1 wt% free MDI based on the total weight of the second polyurethane prepolymer, and optionally further comprising one or more short-chain polyols, and
(iii) combining the first and second polyurethane prepolymer provided in step (i) and step (ii), optionally in the presence of one or more catalysts,
whereas step (i) and (ii) are performed in any order independently of each other.

The invention also relates to the use of the reactive polyurethane prepolymer composition of the invention as an adhesive, preferably as an hot melt adhesive.

### DETAILED DESCRIPTION OF THE INVENTION

In the context of the present invention the following terms have the following meaning:
The article "a", "an" and "the" as used herein, means one or more than one (e.g. include the plural form), unless the context specifically states otherwise.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

When an amount, concentration, value or parameter is given as either a range or a list of upper values and lower values, this is to be understood as specifically disclosing all ranges formed from any pair of any upper range limit and any lower range limit, regardless of whether ranges are separately disclosed. For example, when a range of "1 to 5" is recited, the recited range should be construed as including any single value within the range or as any values encompassed between the ranges, for example, "1 to 4", "1 to 3", "1 to 2", "1 to 2 & 4 to 5", "1 to 3 & 5". Where a range of numerical values is recited herein, unless otherwise stated, the range is intended to include the endpoints thereof, and all integers and fractions within the range.

All ranges recited are inclusive and combinable.

The term "embodiment" or "disclosure", as used herein, unless otherwise indicated, is not meant to be limiting, but applies generally to any of the embodiments defined in the claims or described herein. These terms are used interchangeably herein.

It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination.

"NCO", as used herein, refers to the isocyanate group -N=C=O. The NCO content (also % NCO or NCO-value) is defined as the percent by weight of NCO-groups present in the compound.

If reference is made herein to a molecular weight, this reference refers to the weight average molecular weight Mw, if not explicitly stated otherwise. The weight average molecular weight Mw can be determined by gel permeation chromatography according to DIN 55672, in particular DIN 55672-1 with THF as the eluent. If not stated otherwise, all given molecular weights are those determined by gel permeation chromatography according to DIN 55672-1.

### First and second polyurethane prepolymer

The first and second polyurethane prepolymer are reaction products of the reaction of a diisocyanate with a polyol.

### Diisocyanate

The diisocyanate of the first and the second polyurethane prepolymer of the present invention is methylene diphenyl diisocyanate (MDI). In a preferred embodiment, the first and the second polyurethane prepolymer of the present invention is prepared using 4,4'-methylene diphenyl diisocyanate (4,4'-MDI), 2,4'-methylene diphenyl diisocyanate (2,4'-MDI), 2,2'- methylene diphenyl diisocyanate (2,4'-MDI), polymeric methylene diphenyl diisocyanate (pMDI) or mixtures thereof. In one embodiment, the methylene diphenyl diisocyanate used in the present invention is a mixture comprising 2,4'-MDI and 4,4'-MDI.

Optionally, additional polyurethane prepolymers besides the first and second polyurethane prepolymer, also with different diisocyanates, might be present. Suitable diisocyanates of additional polyurethane prepolymers the present invention include aliphatic diisocyanates, cycloaliphatic diisocyanates, polycyclic diisocyanates, aromatic diisocyanates and aliphatic-aromatic diisocyanates. In a preferred embodiment, the diisocyanate of the additional prepolymer of the present invention is methylene diphenyl diisocyanate (MDI), para-phenylene diisocyanate (PPDI), naphthalene diisocyanate (NDI), hexamethylene diisocyanates (HDI), cyclohexyl diisocyanates (CHDI), isophorone diisocyanate (IPDI), or toluene diisocyanate (TDI).

### Polyol

The polyol of the first and second polyurethane prepolymers of the present invention are not particularly limited and one or more may be used. When the polyurethane compositions of the present invention are used as reactive hot meld adhesives, the polyol components are chosen such that the composition is solid at room temperature. This can either be done by using solid amorphous and/or solid crystalline polyols, or else by co-using an appreciable fraction of short-chain polyols, since these compositions are likewise solid at room temperature owing to the high concentration of urethane groupings.

Polyols include compounds having more than one hydroxyl groups. Thus, polyols suitable for the present invention comprise diols, triols, and/or higher average hydroxyl functionality. The average hydroxyl functionality can range from 2 to 8, preferably 2 to 3 and more preferably from 2 to 2.5. The formation of such polyols is well known in the art.

In some embodiments of the present invention, the polyol comprises at least one polyester polyol, at least one polyether polyol, at least one polycaprolactone polyol, at least one polycarbonate polyol, or combinations thereof.

As a polyol for the first polyurethane prepolymer, the polyester polyol poly(1,6-hexamethylene adipate) glycol (PHAG) is suited. In a preferred embodiment, the polyol of the first polyurethane prepolymer has a molecular weight (Mw) of 500 g/mol to 10,000 g/mol, preferably from 1,000 g/mol to 3,500 g/mol. LF polyurethane prepolymers based on PHAG with a molecular weight Mw of less than 500 g/mol become high melting. In another preferred embodiment, the polyol of the first polyurethane prepolymer comprises two or more poly(1,6-hexamethylene adipate) glycols with different molecular weight.

As a polyol for the second polyurethane prepolymer, polyether polypropylene glycol (PPG), a succinic acid based polyester polyol or mixtures thereof are suited.

In a preferred embodiment, the polyol of the second polyurethane prepolymer is a poly(alkylene glycol succinate), preferably polyethylene glycol succinate) or polypropylene glycol succinate), more preferably polyethylene glycol succinate).

In another preferred embodiment, the polyol of the second polyurethane prepolymer is a poly(dialkylene glycol succinate), preferably poly(diethylene glycol succinate) or poly(dipropylene glycol succinate), more preferably poly(diethylene glycol succinate).

In another preferred embodiment, the polyol of the second polyurethane prepolymer is a succinate of monalkylene and dialkylene glycols, most preferably a succinate of succinate of monoethylene and diethylene glycols (PEDSG).

In a preferred embodiment, the polyol of the second polyurethane prepolymer has a molecular weight (Mw) of 250 g/mol to 4,000 g/mol, preferably from 500 g/mol to 2,000 g/mol. In another preferred embodiment, the polyol of the second polyurethane prepolymer comprises two or more polypropylene glycols and/or two or more poly(diethylene glycol succinate) with different molecular weight.

The average molecular weight (Mw) of the polyols used in the present invention can be determined with gel permeation chromatography (GPC).

### Short-chain polyol

The first or second, preferably the second, polyurethane prepolymer of the present invention optionally comprises in addition one or more short-chain polyols.

The short-chain polyol is linear or branched.

The short-chain polyol is preferably a polyol having 2 to 10, preferably 3 to 9 carbon atoms. In a preferred embodiment, the short chain polyol is selected from the group consisting of ethylene glycol, 1,2-propanediol, 1,3-propanediol, butanediol, in particular 1,3-butylene glycol (1,3-BG), 1,6-hexanediol, neopentyldiol, diethylene glycol, triethylene glycol, triproylene glycol (TPG), 2-methylene-1,3-propanediol, 1,4-pentanediol, glyceride and mixtures thereof.

In particular, the short-chain polyol is selected from the group consisting of ethylene glycol, diethylene glycol, 1,2-propanediol, 1,3-propanediol, butanediol, 1,3-butylene glycol (1,3-BG), dipropylene glycol, triethylene glycol, triproylene glycol (TPG) and 1,6-hexanediol.

In a most preferred embodiment, the short-chain polyol is triproylene glycol (TPG).

### NCO content

The first polyurethane prepolymer of the present invention has an NCO content of 0.5 wt to 7 wt%, preferably of 3 wt% to 7 wt% and more preferably of 5 wt% to 7 wt%.

The second polyurethane prepolymer of the present invention has an NCO content of 0.5 wt to 12 wt%, preferably of 3 wt% to 11 wt% and more preferably of 5 wt% to 10 wt%. The NCO content of prepolymers, given in weight %, can be determined by conventional NCO titration in tetrahydrofuran (THF) as the solvent, whereas, isocyanate is reacted with an excess of din-butylamine to form urea and the unreacted amine is then titrated with 0.1 N hydrochloric acid to the color change of bromophenol blue indicator.

In preferred embodiment, the reactive polyurethane prepolymer composition of the present invention has a total NCO content of 5 wt% or less, preferably 3 wt% or less, more preferably 2 wt% or less and even more preferably 1 wt% or less based on the total weight of the prepolymers. Reactive polyurethane prepolymers with a low total NCO content of 5 wt% or less are preferably cured with moisture.

### Free MDI monomers

The first and second polyurethane prepolymers of the present invention are "low free monomer" polyurethane prepolymer (also known as "low free" or "LF" or "low isocyanate" = "LNCO").

The free diisocyanate monomer in the first and second polyurethane prepolymer reaction product is removed to a concentration of more than 0 wt% and less than 0.1 wt% based on the total weight of the respective polyurethane prepolymer. The polyurethane prepolymer composition of the present invention has less than 0.1 wt% free diisocyanate monomers based on the total weight of the first and second polyurethane prepolymer. Polyurethane prepolymer without any residual free diisocyanate monomer would have an unfavored high viscosity.

### Catalyst

The polyurethane prepolymer composition of the present invention optionally comprises one or more catalysts. The catalyst speeds the formation of the polyurethane prepolymer at its synthesis and/or the moisture curing after the adhesive/sealant material has been applied. The presence of a catalyst is in particular advantageous in case of moisture curing to speed up the curing process while in case of a non-moisture curative supported curing process, a catalyst is typically not necessary.

In a preferred embodiment, the polyurethane prepolymer composition of the present invention comprises one or more catalysts. Useful catalysts for the purposes of the present invention include for example the organometallic compounds of tin, of iron, of titanium, of bismuth such as tin(ll) salts of carboxylic acids, for example tin(ll) acetate, ethyl hexanoate and diethylhexanoate. A further class of compounds is that of the dialkyltin(IV) carboxylates. The carboxylic acids have 2, preferably at least 10 and especially 14 to 32 carbon atoms. Dicarboxylic acids can be used as well. Acids which may be expressly mentioned are adipic acid, maleic acid, fumaric acid, malonic acid, succinic acid, pimelic acid, terephthalic acid, phenylacetic acid, benzoic acid, acetic acid, propionic acid and also 2-ethylhexanoic acid, caprylic acid, capric acid, lauric acid, myristic acid, palmitic acid and stearic acid. Specific compounds are dibutyltin diacetate, dibutyltin maleate, dibutyltin bis(2-ethylhexanoate), dibutyltin dilaurate, dioctyltin diacetate, dioctyltin maleate, dioctyltin bis(2-ethylhexanoate), dioctyltin dilaurate, tributyltin acetate, bis(beta-methoxycarbonylethyl)tin dilaurate and bis(beta-acetylethyl)tin dilaurate.

Oxides, sulfides and also thiolates of tin can be used as well. Specific compounds are bis(tributyltin) oxide, bis(trioctyltin) oxide, dibutyltin bis(2-ethylhexylthiolate), dioctyltin bis(2-ethylhexylthiolate), dibutyltin didodecylthiolate, dioctyltin didodecylthiolate, bis(beta-methoxycarbonylethyl)tin didodecylthiolate, bis(beta -acetylethyl)tin bis(2-ethylhexylthiolate), dibutyltin didodecylthiolate, dioctyltin didodecylthiolate, butyltin tris(thioglycolic acid 2-ethylhexanoate), octyltin tris(thioglycolic acid 2-ethylhexanoate), dibutyltin bis(thioglycolic acid 2-ethylhexanoate), dioctyltin bis(thioglycolic acid 2-ethylhexanoate), tributyltin (thioglycolic acid 2-ethylhexanoate), trioctyltin (thioglycolic acid 2-ethylhexanoate) and also butyltin tris(thioethylene glycol 2-ethylhexanoate), octyltin tris(thioethylene glycol 2-ethylhexanoate), dibutyltin bis(thioethylene glycol 2-ethylhexanoate), dioctyltin bis(thioethylene glycol 2-ethylhexanoate), tributyltin (thioethylene glycol 2-ethylhexanoate) and trioctyltin (thioethylene glycol 2-ethylhexanoate) having the general formula Rₙ₊₁Sn(SCH₂CH₂OCOC₈H₁₇)₃₋ₙ, where R is an alkyl group having 4 to 8 carbon atoms, bis(beta-methoxycarbonylethyl)tin bis(thioethylene glycol 2-ethylhexanoate), bis(beta-methoxycarbonylethyl)tin bis(thioglycolic acid), and bis(beta -acetylethyl)tin bis(thioethylene glycol 2-ethylhexanoate) and bis(beta-acetylethyl)tin bis(thioglycolic acid 2-ethylhexanoate).

Aliphatic tertiary amines are also suitable, especially in the case of a cyclic structure. Useful tertiary amines also include those which additionally bear isocyanate-reactive groups, especially hydroxyl and/or amino groups. Specific examples are: dimethylmonoethanolamine, diethylmonoethanolamine, methylethylmonoethanolamine, triethanolamine, trimethanolamine, tripropanolamine, tributanolamine, trihexanolamine, tripentalamine, tricyclohexanolamine, diethanolmethylamine, diethanolethylamine, diethanolpropylamine, diethanolbutylamine, diethanolpentylamine, diethanolhexylamine, diethanolcyclohexylamine, diethanolphenylamine and also their ethoxylation and propoyxylation products, diazabicyclooctane (DABCO), triethylamine, dimethylbenzylamine, bisdimethylaminoethyl ether, tetramethylguanidine, bisdimethylaminomethylphenol, 2-(2-dimethylaminoethoxy)ethanol, 2-dimethylaminoethyl 3-dimethylaminopropyl ether, bis(2-dimethylaminoethyl) ether, N,N-dimethylpiperazine, N-(2-hydroxyethoxyethyl)-2-azanorbornanes, or else unsaturated bicyclic amines, for example diazabicycloundecene (DBU), N,N,N,N-tetramethylbutane-1,3-- diamine, N,N,N,N-tetramethylpropane-1,3-diamine and N,N,N,N-tetramethylhexane-1,6-diamine. The catalyst may also be present in oligomerized or polymerized form, for example as N-methylated polyethyleneimine.

However, catalysts which are very particularly preferred are the derivatives of morpholine. Specific examples of suitable morpholino compounds are bis(2-(2,6-dimethyl-4-morpholino)ethyl)-(2-(4-morpholino)ethyl)amine, bis(2-(2,6-dimethyl-4-morpholino)ethyl)-(2-(2,6-diethyl-4-morpholino)ethyl)amine, tris(2-(4-morpholino)ethyl)amine, tris(2-(4-morpholino)propyl)amine, tris(2-(4-morpholino)butyl)amine, tris(2-(2,6-dimethyl-4-morpholino)ethyl)amine, tris(2-(2,6-diethyl-4-morpholino)ethyl)amine, tris(2-(2-methyl-4-morpholino)ethyl)amine or tris(2-(2-ethyl-4-morpholino)ethyl)amine, dimethylaminopropylmorpholine, bis(morpholinopropyl)methylamine, diethylaminopropylmorpholine, bis(morpholinopropyl)ethylamine, bis(morpholinopropyl)propylamine, morpholinopropylpyrrolidone or N-morpholinopropyl-N'-methylpiperazine, 4,4'-(Oxydi-2,1-ethanediyl)bismorpholine (DMDEE) or di-2,6-dimethylmorpholinoethyl) ether.

The aforementioned morpholine derivatives have a particularly high catalytic activity, especially with regard to the water (moisture) isocyanate reaction. Very low catalyst concentrations are therefore sufficient for curing the adhesives.

In one preferred embodiment, the catalyst is present in an amount of 0.1 pph to 1.0 pph, preferably in an amount of 0.15 pph to 0.25 pph.

In a more preferred embodiment, the catalyst is 4,4'-(Oxydi-2,1-ethanediyl)bismorpholine (DMDEE).

The invention further relates to a reactive polyurethane prepolymer composition comprising a modified second polyurethane prepolymer which is the reaction product of the reaction of methylene diphenyl diisocyanate (MDI) with succinic acid based polyester polyol with a molecular weight (Mw) of 250 g/mol to 4,000 g/mol and a short-chain polyol with an NCO content of 0.5 wt% to 12 wt%, preferably of 3 wt% to 11 wt%, more preferably of 5 wt% to 10 wt% and most preferably 8 wt% to 10 wt%, comprising less than 0.1 wt% free MDI based on the total weight of the modified second polyurethane prepolymer.

Reactive low free polyurethane prepolymers comprising MDI, succinic acid based polyester polyol and a short-chain diol with high NCO values of 8 wt% to 10 wt% provide excellent adhesive properties, i.e. short initial bond times and low viscosities at high temperatures (i.e. 100°C) in the absence of another polyurethane prepolymer such as the first polyurethane prepolymer. Thus the invention relates to a polyurethane prepolymer which is the reaction product of the reaction of methylene diphenyl diisocyanate (MDI) with succinic acid based polyester polyol with a molecular weight (Mw) of 250 g/mol to 4,000 g/mol and a short-chain polyol with an NCO content of 0.5 wt% to 12 wt%, preferably of 3 wt% to 11 wt%, more preferably of 5 wt% to 10 wt% and most preferably 8 wt% to 10 wt%, comprising less than 0.1 wt% free MDI based on the total weight of the polyurethane prepolymer.

In one embodiment, the short-chain diol is a polyol having 2 to 10, preferably 3 to 9 carbon atoms. In a preferred embodiment, the short chain polyol is selected from the group consisting of ethylene glycol, 1,2-propanediol, 1,3-propanediol, butanediol, in particular 1,3-butylene glycol (1,3-BG), 1,6-hexanediol, neopentyldiol, diethylene glycol, triethylene glycol, triproylene glycol (TPG), 2-methylene-1,3-propanediol, 1,4-pentanediol, glyceride and mixtures thereof. In a more preferred embodiment, the short-chain polyol is 1,3-butylene glycol (1,3-BG).

### Process for preparing the first and second polyurethane prepolymer

The first and second polyurethane prepolymer according to the present invention is prepared by the reaction of diisocyanate with at least one polyol.

In preferred embodiments, the polyurethane prepolymer of the present invention is prepared by reaction of at least one polyol with MDI.

In a preferred embodiment, the first polyurethane prepolymers is prepared by the reaction of MDI with PHAG.

In a preferred embodiment, the second polyurethane prepolymers is prepared by the reaction of MDI with a succinic acid based polyester polyol and/or PPG, more preferably by the reaction of MDI and PPG.

The first and second polyurethane prepolymer of the present invention can be prepared under the conditions of heating a reaction mixture of the polyol and the MDI at 50 °C to 150 °C for 10 min to 24 h, preferably 60°C to 100°C for 2 h to 6 h.

Methods for synthesizing polyurethane prepolymers are generally known in the art. Generally, the polyurethane prepolymers of the present invention are made using standard reaction processes and conditions as known in the art for the production of polyurethane prepolymers.

The polyurethane prepolymer of the present invention is typically prepared using an excess of diisocyanate monomer resulting in a polyurethane prepolymer reaction product comprising unreacted monomer, e.g., unreacted or "free" diisocyanate. Levels of 20 wt% or more of free diisocyanate monomer based on the polyurethane prepolymer composition, may be encountered.

Any process suitable in reducing the amount of free diisocyanate monomer in the polyurethane prepolymer composition to the low levels of the present invention may be employed. A variety of methods is known for reducing the residual isocyanate content of diisocyanate monomers to a minimum such as wiped film evaporation, solvent aided distillation/co-distillation, molecular sieves, and solvent extraction. Distillation under reduced pressure is preferred, in particular thin film or agitated film evaporation under vacuum.

### Reactive polyurethane prepolymer composition

The invention further relates to a reactive polyurethane prepolymer composition, comprising the first polyurethane prepolymer, the second polyurethane prepolymer and, optionally one or more catalysts.

Without being bound to any theory, the applicants believe that high crystallinity polyol (such as PHAG) in the composition of the present invention enables a high strength after short cure time (e.g. 30 min). Additional polyol such as PHAG bring the polyurethane prepolymer to a lower NCO content of about less than 3 wt% or even less than 1 wt%.

LFMDI/PHAG with high molecular weight of the polyol has a low NCO content. A low NCO content is disadvantageous for the adhesive performance. LFM/PPG-TPG prepolymers comprising in addition TPG as a short-chain polyol with a low molecular weight have a high NCO content which increases the performance. TPG also adds short segments which further increase the adhesive performance.

### Process for preparing reactive polyurethane prepolymer composition

The invention further relates to a process for producing a reactive polyurethane prepolymer composition according to the present invention, comprising the steps of:
(i) providing a first polyurethane prepolymer which is the reaction product of the reaction of methylene diphenyl diisocyanate (MDI) with poly(1,6-hexamethylene adipate) glycol with a molecular weight (Mw) of 500 g/mol to 10,000 g/mol and with an NCO content of 0.5 wt% to 7 wt%, preferably of 5 wt% to 7 wt%, comprising less than 0.1 wt% free MDI based on the total weight of the first polyurethane prepolymer,
(ii) providing a second polyurethane prepolymer which is the reaction product of the reaction of methylene diphenyl diisocyanate (MDI) with polypropylene glycol (PPG) or a succinic acid based polyester polyol with a molecular weight (Mw) of 250 g/mol to 4,000 g/mol and with an NCO content of 0.5 wt% to 12 wt%, preferably of 3 wt% to 11 wt% and more preferably of 5 wt% to 10 wt%, comprising less than 0.1 wt% free MDI based on the total weight of the second polyurethane prepolymer, and optionally further comprising one or more short-chain polyol, and
(iii) combining the first and second polyurethane prepolymer provided in step (i) and step (ii), optionally in the presence of one or more catalysts,
whereas step (i) and (ii) are performed in any order independently of each other.

Optionally, additives can be added in a further step (iv) to the reactive polyurethane prepolymer composition.

### Curative

The polyurethane prepolymers of the present invention can be cured with moisture or water.

Suitable further curatives for the polyurethane prepolymer composition of the present invention include polyamines, polyols, or blends thereof.

Suitable polyamines for the polyurethane prepolymer composition of the present invention include both aromatic and aliphatic diamines, primary and secondary amine terminated polyether polyols, and difunctional, trifunctional, and polymeric amines.

Suitable of polyols for the polyurethane prepolymer composition of the present invention include polyester or polyether polyols, which can be diols, triols and tetrols, having primary, secondary and/or tertiary alcohol groups. These polyols may be mixed with diamines.

Polyols are typically preferred over polyamines. In a preferred embodiment, the curative is a polypropylene glycol triol (PPG triol).

### Additives

The polyurethane prepolymer composition of the present invention optionally comprises, where appropriate, further additives such as stabilizers, thickening agents, tackifying resins, fillers, plasticizers, thixotropic agents, color agents, pigments, solvents and/or drying agents.

Stabilizers for the purposes of this invention refers on the one hand to stabilizers which have a viscosity-stabilizing effect on polyurethane prepolymers during production, storage and use. These are for example monofunctional carbonyl chlorides, monofunctional high-reactivity isocyanates, but also non-corrosive inorganic acids, examples being benzoyl chloride, toluenesulfonyl isocyanate, phosphoric acid or phosphorous acid. Useful stabilizers for the purposes of this invention further include antioxidants, UV stabilizers or hydrolysis stabilizers. The selection of these stabilizers depends not only on the main components of the composition but also on the application conditions and the likely destabilizing stresses on the cured product. When the polyurethane prepolymer is predominantly constructed from polyether building blocks, there is mainly a need for antioxidants with or without UV protectants. Examples thereof are the commercially available sterically hindered phenols and/or thioethers and/or substituted benzotriazoles or the sterically hindered amines of the HALS (Hindered Amine Light Stabilizer) type.

### Method for adhesively joining

The present invention is also related to a method for adhesively joining or sealing two substrates, comprising the steps of:
(1) applying onto a substrate the reactive polyurethane prepolymer composition of the present invention, and
(2) contacting the reactive polyurethane prepolymer composition of the present invention applied on the substrate of step (1) to a second substrate such that a bond is formed.

In one embodiment, the reactive polyurethane prepolymer composition used in the method of the present invention comprises a reactive polyurethane prepolymer composition comprising
(a) a first polyurethane prepolymer which is the reaction product of the reaction of methylene diphenyl diisocyanate (MDI) with poly(1,6-hexamethylene adipate) glycol (PHAG) with a molecular weight (Mw) of 500 g/mol to 10,000 g/mol and with an NCO content of 0.5 wt% to 7 wt%, preferably of 3 wt% to 7 wt% and more preferably of 5 wt% to 7 wt%, comprising less than 0.1 wt% free MDI monomer based on the total weight of the first polyurethane prepolymer,
(b) a second polyurethane prepolymer which is the reaction product of the reaction of methylene diphenyl diisocyanate (MDI) with polypropylene glycol (PPG) or a succinic acid based polyester polyol with a molecular weight (Mw) of 250 g/mol to 4,000 g/mol and with an NCO content of 0.5 wt% to 12 wt%, preferably of 3 wt% to 11 wt% and more preferably of 5 wt% to 10 wt%, comprising less than 0.1 wt% free MDI monomer based on the total weight of the second polyurethane prepolymer and, optionally further comprising one or more short-chain polyols, and
(c) optionally one or more catalysts.

Substrates that may be bonded with the adhesive include cold rolled steel, aluminum, fiberglass reinforced polyester (FRP), sheet molding compound (SMC), plastics, wood, and glass.

Thus, the present invention relates further to the use of the reactive polyurethane prepolymer composition of the present invention as an adhesive, preferably as an hot melt adhesive.

The use of the polyurethane prepolymer composition of the present invention as a hot melt adhesive provides hot melt adhesive based on low free polyurethane prepolymers with less than 0.1 wt% free diisocyanate monomer showing improved lap shear strength after short cure time which can be easily produced.

### Abbreviations

The abbreviation "Conv." means conventional.

The abbreviation "DMDEE" means 4,4'-(Oxydi-2,1-ethanediyl)bismorpholine.

The abbreviation "MDI" means methylene diphenyl diisocyanate.

The abbreviation "PHAG" means poly(1,6-hexamethylene adipate) glycol.

The abbreviation "PEDSG" means polyethylene, diethylene succinate) glycol.

The abbreviation "PPG" means polypropylene glycol.

The abbreviation "TPG" means tripropylene glycol.

The present invention is illustrated further by means of the following Examples:

### EXAMPLES

The following materials were used in the Examples:

### Diisocyanate

- Mondur^{®} M: 4,4'-methylene diphenyl diisocyanate; MDI; CAS No.: 101-68-8; (Commercially available from Covestro)
- Polyol Fomrez^{®} 66-112: poly(1,6-hexamethylene adipate) glycol; (PHAG-1000); Mw=1000 g/mol; CAS No.: 25212-06-0; polyester of hexanediol and adipic acid; (Commercially available from LANXESS)
- Fomrez^{®} 66-56: poly(1,6-hexamethylene adipate) glycol; (PHAG-2000); Mw=2000 g/mol; CAS No.: 25212-06-0; polyester of hexanediol and adipic acid; (Commercially available from LANXESS)
- Fomrez^{®} 66-32: poly(1,6-hexamethylene adipate) glycol; (PHAG-3500); Mw=3500 g/mol; CAS No.: 25212-06-0; polyester of hexanediol and adipic acid; (Commercially available from LANXESS)
- Lupranol^{®} 1200: polypropylene glycol; PPG-500; Mw=500 g/mol; CAS No.: 25322-69-4; (Commercially available from BASF)
- Lupranol^{®} 1100/1: polypropylene glycol; PPG-1100; Mw=1100 g/mol; CAS No.: 25322-69-4; (Commercially available from BASF)
- ELAPOL 5705 A: saturated polyester - succinate of monoethylene and diethylene glycols; PEDSG; Mw=500 g/mol; (Commercially available from ELAchem)
- Tripropylene Glycol Regular Grade: tri(propylene) glycol isomer mixture; TPG; CAS No.: 24800-44-0; (Commercially available from DOW)
- 1,3-Butylene Glycol: 1,3-butane diol; 1,3-BG; CAS No.: 107-88-0;

### Catalyst

- DMDEE: 4,4'-(Oxydi-2,1-ethanediyl)bismorpholine; DMDEE (dimorpholino-diethyl ether); CAS No. 6425-39-4; (Commercially available from Sigma Aldrich)

### Methods:

### Lap shear strength

The lap shear strength was determined according to ASTM D1002-10, Apparent Shear Strength of Single-Lap-Joint Adhesively Bonded Metal Specimens by Tension Loading (Metal-to-Metal). High lap shear strength values are desired to provide excellent reactive adhesives.

### Viscosity

The viscosity was measured according to ASTM D4878.

### NCO content

The NCO content of all prepolymers, given in weight %, was measured by conventional NCO titration in tetrahydrofuran (THF) as the solvent. In brief, isocyanate is reacted with an excess of di-n-butylamine to form urea. The unreacted amine is then titrated with 0.1 N hydrochloric acid to the color change of bromophenol blue indicator. Analyzed samples were tested in duplicate.

### Free MDI monomer content

The free MDI monomer content of the polyurethane prepolymers was determined by HPLC.

### Preparation of polyurethane prepolymers

### LFM/PHAG-3500

1756 g of 4,4'-methylene diphenyl diisocyanate (4,4'-MDI) were added to a reactor and heated to 50 ºC. 2444 g of PHAG-3500 was then added. The reaction temperature was held at 80 ºC for 4 hours. Excess residual 4,4'-MDI monomer was removed by thin-film distillation under reduced pressure from the reaction product to a level of less than 0.1 wt% residual 4,4'-MDI, and total NCO content of 1.90 wt%.

### LFM/PHAG-2000

1878 g of 4,4'-methylene diphenyl diisocyanate (4,4'-MDI) were added to a reactor and heated to 50 ºC. 2122 g of PHAG-2000 was then added. The reaction temperature was held at 80 ºC for 4 hours. Excess residual 4,4'-MDI monomer was removed by thin-film distillation under reduced pressure from the reaction product to a level of less than 0.1 wt% residual 4,4'-MDI, and total NCO content of 2.96 wt%.

### LFM/PHAG-1000

6706 g of 4,4'-methylene diphenyl diisocyanate (4,4'-MDI) were added to a reactor and heated to 50 ºC. 3794 g of PHAG-1000 was then added. The reaction temperature was held at 80 ºC for 4 hours. Excess residual 4,4'-MDI monomer was removed by thin-film distillation under reduced pressure from the reaction product to a level of less than 0.1 wt% residual 4,4'-MDI, and total NCO content of 4.99 wt%.

### Conv MDI/PHAG-3500

451 g of 4,4'-methylene diphenyl diisocyanate (4,4'-MDI) were added to a reactor and heated to 50 ºC. 3049 g of PHAG-3500 was then added. The reaction temperature was held at 80 ºC for 4 hours. The level of residual 4,4'-MDI monomer was about 2.5 wt% and the total NCO content was 2.37 wt%.

### Conv MDI/PHAG-2000

690 g of 4,4'-methylene diphenyl diisocyanate (4,4'-MDI) were added to a reactor and heated to 50 ºC. 2810 g of PHAG-2000 was then added. The reaction temperature was held at 80 ºC for 4 hours. The level of residual 4,4'-MDI monomer was about 2.2 wt% and the total NCO content was 3.23 wt%.

### Conv MDI/PHAG-1000

968 g of 4,4'-methylene diphenyl diisocyanate (4,4'-MDI) were added to a reactor and heated to 50 ºC. 2000 g of PHAG-1000 was then added. The reaction temperature was held at 80 ºC for 4 hours. The level of residual 4,4'-MDI monomer was about 3.2 wt% and the total NCO content was 5.23 wt%.

### LFM/PPG-500/TPG

6687 g of mixed isomer methylene diphenyl diisocyanate (50:50 mixture of 2,4'-MDI & 4,4'-MDI) were added to a reactor at 23 ºC. 451 g of PPG-500 and 827 g of TPG was then added. The reaction temperature was held at 80 ºC for 4 hours. Excess residual mixed isomer MDI monomer was removed by thin-film distillation under reduced pressure from the reaction product to a level of less than 0.1 wt% residual 4,4'-MDI monomer and total NCO content of 9.92 wt%.

### Conv MDI/PPG-1100

1381 g of 4,4'-methylene diphenyl diisocyanate (4,4'-MDI) were added to a reactor and heated to 50 ºC. 1800 g of PPG-1100 was then added. The reaction temperature was held at 80 ºC for 4 hours. The level of residual 4,4'-MDI monomer was about 11.2 wt% and the total NCO content was 9.80 wt%.

### LFM/PEDSG-500

8609 g of 4,4'-methylene diphenyl diisocyanate (4,4'-MDI) were added to a reactor and heated to 50 ºC. 2422 g of PEDGS-500 was then added. The reaction temperature was held at 80 ºC for 4 hours. Excess residual 4,4'-MDI monomer was removed by thin-film distillation under reduced pressure from the reaction product to a level of less than 0.1 wt% residual 4,4'-MDI monomer and total NCO content of 7.56 wt%.

### Conv MDI/PEDSG-500

1463 g of 4,4'-methylene diphenyl diisocyanate (4,4'-MDI) were added to a reactor and heated to 50 ºC. 1539 g of PEDGS-500 was then added. The reaction temperature was held at 80 ºC for 4 hours. The level of residual 4,4'-MDI monomer was about 10.2 wt% and the total NCO content was 7.76 wt%.

The viscosities of the prepolymers were measured. Results are shown in Table 1.

**Table 1. Viscosities of LF prepolymers and conventional prepolymers**

| | **Viscosity [Pa*s]** | | | |
|---|---|---|---|---|
| **Temperature [°C]** | **50** | **60** | **70** | **100** |
| **LFM/PHAG-3500** | solid | 18.6 | 11.38 | 3.44 |
| **LFM/PHAG-2000** | solid | 8.65 | 4.48 | 1.05 |
| **LFM/PHAG-1000** | solid | solid | 3.20 | 0.67 |
| **Conv MDI/PHAG-3500** | solid | 54.7 | 33.4 | 9.85 |
| **Conv MDI/PHAG-2000** | solid | 29.9 | 14.0 | 3.95 |
| **Conv MDI/PHAG-1000** | solid | 27.45 | 11.95 | 1.39 |

Low free MDI-PHAG polyurethane prepolymer have a desirable lower viscosity than conventional MDI-PHAG polyurethane prepolymers with a PHAG polyol of the same weight.

In order to determine the crystallization, the initial bond time was recorded when adhesive cools to a waxy solid (see Tables 2 and 6 below). The adhesive was applied at 100°C to aluminum coupons (at room temperature). While cooling down, the reactive adhesive formulation solidifies and was allowing the coupon substrates to be handled without damaging the bond.

**Table 2. Initial bond times of polyurethane prepolymers**

| **Formulation** | **Initial Bond Time [min]** |
|---|---|
| LFM/PHAG-3500 | 2 |
| LFM/PHAG-2000 | 2.5 |
| LFM/PHAG-1000 | 10 |
| MDI/PHAG-3500 | 2 |
| MDI/PHAG-2000 | 4 |
| MDI/PHAG-1000 | >30 |

The results in Table 2 show that adhesives comprising low free (LF) polyurethane prepolymer have equal or even significantly shorter initial bond times. MDI/PHAG-1000 did not crystalize even after 24 hours. LF polyurethane prepolymers have a higher ordered structure which leads to better crystallinity in the final reactive adhesive formulation. A decrease in the molecular weight of the polyol leads to an increase in the initial bond time.

Polyurethane prepolymers were moisture cured for 30 minutes, 24 hours and 10 days in the presence of 0.2 pph DMDEE catalyst. For comparison, the prepolymers also underwent accelerated cure with water @ 150% theory for 24 hrs. Each experiment was repeated five times and the average results (trimmed mean) of the lap shear strength tests are shown in Table 3.

**Table 3. Lap Shear Strength of moisture cured prepolymers**

| | **Lap Shear Strength** | | | **[kPa]** |
|---|---|---|---|---|
| **Cure time** | **30 min** | **24 hrs** | **10 days** | **H₂O cure** |
| **LFM/PHAG-3500** | 2461 | 2703 | 3671 | 6821 |
| **LFM/PHAG-2000** | 2164 | 2185 | 3664 | 5430 |
| **LFM/PHAG-1000** | 1615 | 1896 | 3586 | n.d. |
| **Conv MDI/PHAG-3500** | 2703 | 2925 | 3991 | 6778 |
| **Conv MDI/PHAG-2000** | 1821 | 1922 | 3678 | 4945 |
| **Conv MDI/PHAG-1000** | * | 1671 | n.d. | n.d. |

| | | | | |
|---|---|---|---|---|
| * samples did not crystallize and could not be tested @ 30 minutes; n.d. = not determined | | | | |

The effect of the molecular weight (Mw) of the PHAG polyols is shown in Table 3. The comparison between the low free polyurethane prepolymers and the conventional polyurethane prepolymers shows, that lower molecular weight leads to lower lap shear strength.

### Preparation of polyurethane prepolymers blends

LFM/PHAG-3500 + LFM/PPG-500/TPG Blend @ 3% NCO
   129.75 g of LFM/PHAG-3500 and 20.25 g LFM/PPG-500/TPG were added to a container at 70 °C. The contents were mixed for 2 minutes @ 2,300 rpm in a speedmixer.
LFM/PHAG-3500 + LFM/PPG-500/TPG Blend @ 5% NCO
   92.25 g of LFM/PHAG-3500 and 57.75 g LFM/PPG-500/TPG were added to a container at 70 °C. The contents were mixed for 2 minutes @ 2,300 rpm in a speedmixer.
Conv MDI/PHAG-3500 + Conv MDI/PPG-1100 Blend @ 3% NCO
   137.70 g of Conv MDI/PHAG-3500 and 12.30 g Conv MDI/PPG-1100 were added to a container at 70 °C. The contents were mixed for 2 minutes @ 2,300 rpm in a speedmixer.
Conv MDI/PHAG-3500 + Conv MDI/PPG-1100 Blend @ 5% NCO
   97.20 g of Conv MDI/PHAG-3500 and 52.80 g Conv MDI/PPG-1100 were added to a container at 70 °C. The contents were mixed for 2 minutes @ 2,300 rpm in a speedmixer.
LFM/PHAG-3500 + LFM/PEDSG-500 Blend @ 3% NCO
   97.10 g of LFM/PHAG-3500 and 22.90 g LFM/PEDSG-500 were added to a container at 70 °C. The contents were mixed for 2 minutes @ 2,300 rpm in a speedmixer.
LFM/PHAG-3500 + LFM/PEDSG-500 Blend @ 5% NCO
   54.60 g of LFM/PHAG-3500 and 65.40 g LFM/PEDSG-500 were added to a container at 70 °C. The contents were mixed for 2 minutes @ 2,300 rpm in a speedmixer.
Conv MDI/PHAG-3500 + Conv MDI/PEDSG-500 Blend @ 3% NCO
   106.40 g of Conv MDI/PHAG-3500 and 13.60 g Conv MDI/PEDSG-500 were added to a container at 70 °C. The contents were mixed for 2 minutes @ 2,300 rpm in a speedmixer.
Conv MDI/PHAG-3500 + Conv MDI/PEDSG-500 Blend @ 5% NCO
   61.70 g of Conv MDI/PHAG-3500 and 58.30 g Conv MDI/PEDSG-500 were added to a container at 70 °C. The contents were mixed for 2 minutes @ 2,300 rpm in a speedmixer.

The viscosities of the polyurethane prepolymer blends were measured. Results are shown in Tables 4 and 5.

**Table 4. Viscosities of prepolymer blends**

| | **Viscosity [Pa*s]** | | |
|---|---|---|---|
| **Temperature [°C]** | **50** | **70** | **100** |
| **LFM/PHAG-3500 / LFM-PPG-TPG** @ 3% NCO* | 53.5 | 14.63 | 3.95 |
| **LFM/PHAG-3500 / LFM-PPG-TPG** @ 5% NCO* | 51.0 | 12.5 | 2.80 |
| **Conv MDI/PHAG-3500** / **Conv MDI-PPG** @ **3% NCO** | 86.5 | 26.3 | 8.13 |
| **Conv MDI/PHAG-3500** / **Conv MDI-PPG** @ **5% NCO** | 29.63 | 9.65 | 2.83 |

| | | | |
|---|---|---|---|
| *inventive examples | | | |

Low free MDI-PHAG/MDI-PPG-TPG prepolymer blends have a desirable lower viscosity than conventional MDI-PHAG/MDI-PPG-TPG prepolymer blends with the same NCO content.

**Table 5. Viscosities of prepolymer blends**

| | **Viscosity [Pa*s]** | | |
|---|---|---|---|
| **Temperature [°C]** | **50** | **70** | **100** |
| **LFM-PHAG-3500/LFM-PEDSG-500 @ 3% NCO*** | 54.00 | 13.69 | 3.68 |
| **LFM-PHAG-3500/LFM-PEDSG-500 @ 5% NCO*** | 56.25 | 11.69 | 2.08 |
| **Conv MDI-PHAG-3500/Conv MDI-PEDSG-500** @ **3% NCO** | 118.00 | 31.63 | 8.85 |
| **Conv MDI-PHAG-3500/Conv MDI-PEDSG-500** @ **5% NCO** | 131.00 | 34.25 | 8.00 |

| | | | |
|---|---|---|---|
| *inventive examples | | | |

Low free MDI-PHAG/MDI-PEDSG prepolymer blends have a desirable lower viscosity than conventional MDI-PHAG/MDI-PEDSG prepolymer blends with the same NCO content.

**Table 6. Initial bond times of polyurethane prepolymer blends**

| **Formulation** | **Initial Bond Time [min]** |
|---|---|
| LFM/PHAG-3500/PEDSG-500 blend (3.00% NCO)* | 3 |
| LFM/PHAG-3500/PEDSG-500 blend (5.00% NCO)* | 5 |
| MDI/PHAG-3500/PEDSG-500 blend (3.00% NCO) | 4.0 |
| MDI/PHAG-3500/PEDSG-500 blend (5.00% NCO) | 5.5 |

| | |
|---|---|
| *inventive examples | |

LF polyurethane prepolymer blends show shorter initial bond times compared to blends of conventional polyurethane prepolymers with the same NCO content. Polyurethane prepolymer blends with higher NCO content show longer initial bond times.

**Table 7. Initial bond times of polyurethane prepolymer blends**

| **Formulation** | **Initial Bond Time [min]** |
|---|---|
| LFM/PHAG-3500/PPG-500/TPG blend (3.00% NCO)* | 2.5 |
| LFM/PHAG-3500/PPG-500/TPG blend (5.00% NCO)* | 12-15 |
| MDI/PHAG-3500/PPG-1100 blend (3.00% NCO) | 3.0 |
| MDI/PHAG-3500/PPG-1100 blend (5.00% NCO) | 5 |

LF prepolymer blends comprising non crystalline short-chain diol TPG showed still acceptable initial bond times of less than 20 min which is comparable or partially better than similar conventional MDI prepolymer blends. High levels of free MDI monmers, as they are present in conventional MDI prepolymers, have an effect on the crystallization rate.

Polyurethane prepolymer blends were moisture cured for 30 minutes, 24 hours and 10 days in the presence of 0.2 pph DMDEE catalyst. For comparison, the prepolymer blends also underwent accelerated cure with water to get a fully cured material in short time. Each experiment was repeated five times and the average results (trimmed mean) of the lap shear strength tests are shown in Tables 8 and 9.

**Table 8. Lap shear strength of moisture cured polyurethane prepolymer blends**

| | **Lap Shear Strength [kPa]** | | | |
|---|---|---|---|---|
| **Cure time** | **30 min** | **24 hrs** | **10 days** | **H₂O cure** |
| **LFM/PHAG-3500** / **LFM/PEDSG-500 @ 3% NCO*** | 2643 | 3322 | 4504 | 5073 |
| **LFM/PHAG-3500** / **LFM/PEDSG-500 @ 5% NCO*** | 783 | 1053 | 1793 | 3338 |
| **Conv MDI/PHAG-3500 / Conv MDI/PEDSG-500 @ 3% NCO** | 2649 | 3247 | 4522 | 4458 |
| **Conv MDI/PHAG-3500 / Conv MDI/PEDSG-500 @ 5% NCO** | 1093 | 1353 | 2203 | 2662 |

| | | | | |
|---|---|---|---|---|
| *inventive examples | | | | |

Polyurethane prepolymer compositions (hot melt adhesives) based on LF MDI prepolymer blends comprising LFM/PHAG and LFM/PEDSG lead to moisture cured polyurethane adhesives with an equal or even desirable higher lap shear strength after the same curing time than polyurethane prepolymer compositions based on conventional polyurethane prepolymer blends comprising MDI/PHAG and MDI/PEDSG with the same NCO content. The examples show that a fully cured (water cured) LF MDI prepolymer blend has a higher lap shear strength than polyurethane prepolymer compositions based on conventional polyurethane prepolymer blends with the same NCO content.

**Table 9. Lap shear strength of moisture cured polyurethane prepolymer blends**

| | **Lap Shear Strength [kPa]** | | | |
|---|---|---|---|---|
| **Cure time** | **30 min** | **24 hrs** | **10 days** | **H₂O cure** |
| **LFM/PHAG-3500** / **LFM/PPG-TPG@ 3% NCO*** | 2790 | 3372 | 4107 | 6205 |
| **LFM/PHAG-3500** / **LFM/PPG-TPG@ 5% NCO*** | 1276 | 1694 | 2353 | 7930 |
| **Conv MDI/PHAG-3500** / **Conv MDI/PPG** @ **3% NCO** | 2023 | 2191 | 2845 | 5151 |
| **Conv MDI/PHAG-3500** / **Conv MDI/PPG** @ **5% NCO** | 733 | 821 | 1253 | 2244 |

| | | | | |
|---|---|---|---|---|
| *inventive examples | | | | |

Polyurethane prepolymer compositions (hot melt adhesives) based on LF MDI prepolymer blends comprising LFM/PHAG and LFM/PPG-TPG lead to moisture cured polyurethane adhesives with a desirable higher lap shear strength after the same curing time than polyurethane prepolymer compositions based on conventional polyurethane prepolymer blends comprising MDI/PHAG and MDI-PPG with the same NCO content.

### Preparation of high-NCO polyurethane prepolymers (no-blends)

LFM/PEDSG-500 @ 7.5% NCO
   3560 g of 4,4'-methylene diphenyl diisocyanate (4,4'-MDI) were added to a reactor and heated to 50 ºC. 99 g of PEDGS-500 was then added. The reaction temperature was held at 80 ºC for 4 hours. Excess residual 4,4'-MDI monomer was removed by thin-film distillation under reduced pressure from the reaction product to a level of less than 0.1 wt% residual 4,4'-MDI monomer and total NCO content of 7.60 wt%.
LFM/PEDSG-500-1,3BG @ 8% NCO
   3606 g of 4,4'-methylene diphenyl diisocyanate (4,4'-MDI) were added to a reactor and heated to 50 °C. 868 g of PEDGS-500 and 27 g of 1,3-butylene glycol was then added. The reaction temperature was held at 80 °C for 4 hours. Excess residual 4,4'-MDI monomer was removed by thin-film distillation under reduced pressure from the reaction product to a level of less than 0.1 wt% residual 4,4'-MDI monomer and total NCO content of 7.97 wt%.
LFM/PEDSG-500-1,3BG @ 9% NCO
   3786 g of 4,4'-methylene diphenyl diisocyanate (4,4'-MDI) were added to a reactor and heated to 50 °C. 636 g of PEDGS-500 and 78 g of 1,3-butylene glycol was then added. The reaction temperature was held at 80 °C for 4 hours. Excess residual 4,4'-MDI monomer was removed by thin-film distillation under reduced pressure from the reaction product to a level of less than 0.1 wt% residual 4,4'-MDI monomer and total NCO content of 9.14 wt%.
LFM/PEDSG-500-1,3BG @ 10% NCO
   3943 g of 4,4'-methylene diphenyl diisocyanate (4,4'-MDI) were added to a reactor and heated to 50 °C. 434 g of PEDGS-500 and 123 g of 1,3-butylene glycol was then added. The reaction temperature was held at 80 °C for 4 hours. Excess residual 4,4'-MDI monomer was removed by thin-film distillation under reduced pressure from the reaction product to a level of less than 0.1 wt% residual 4,4'-MDI monomer and total NCO content of 9.14 wt%.

**Table 8. Comparison of viscosities**

| | **Viscosity [Pa*s]** | | | |
|---|---|---|---|---|
| **Temperature [°C]** | **LFM/PEDSG-500 (7.5% NCO)** | **LFM/PEDSG-500-1,3BG (8% NCO)** | **LFM/PEDSG-500-1,3BG (9% NCO)** | **LFM/PEDSG-500-1,3BG (10% NCO)** |
| 50 | 89.50 | 95.00 | 167.00 | 485.00 |
| 70 | 7.60 | 6.98 | 9.48 | 17.50 |
| 100 | 0.73 | 0.66 | 0.72 | 0.985 |

As shown in Table 8, the viscosity of the prepolymers comprising 1,3-BG and higher NCO increases drastically at 50°C. However, the table further shows that the viscosity stays fairly low at 100°C which makes the prepolymers with 1,3-BG and high NCO (8-10%) suitable for hot-melt adhesive applications.

### Initial Bond Time

2 wooden popsicle sticks (baltic birch) were bonded with 1 mL of prepolymer and monitored for establishment of an initial bond. The cooling adhesive is periodically probed with a wooden applicator. When the adhesive no longer pulls away with the applicator when probed, the initial bond is considered established. Bond area and bond gap were kept constant throughout the experiment.

**Table 9. Initial bond times of LFM/PEDSG prepolymers**

| **Batch** | **Initial Bond Time [min]** |
|---|---|
| LFM/PEDSG-500 | 5 |
| LFM/PEDSG-500-1 ,3BG (8% NCO) | 4 |
| LFM/PEDSG-500-1 ,3BG (9% NCO) | 2.5 |
| LFM/PEDSG-500-1 ,3BG (10% NCO) | 1 |

As shown in Table 9, increasing 1,3-BG content was found to correspond to decreasing initial bond time. Reactive low free polyurethane prepolymers comprising MDI, succinic acid based polyester polyol and a short-chain diol with high NCO values of 8 wt% to 10 wt% provide excellent adhesive properties.

### Viscosity Build

Prepolymer, viscometer test cell and #27 spindle were preconditioned at 100°C, then transferred to a viscometer and an unheated thermosel (22.5 ± 0.5°C). Viscosity of the prepolymer was measured as it cooled by conduction to the unheated thermosel. The relative rates of viscosity build correspond with the rates at which an initial bond would be developed in hot melt applications.

**Table 10. Viscosities of LFM/PEDSG prepolymers**

| **Cooling time [min]** | **Viscosity [Pa*s]** | | | |
|---|---|---|---|---|
| | **LFM/PEDSG-500 (7.5% NCO)** | **LFM/PEDSG-500-1,3BG (8% NCO)** | **LFM/PEDSG-500-1,3BG (9% NCO)** | **LFM/PEDSG-500-1,3BG (10% NCO)** |
| 0 | 1.45 | 2.08 | 2.99 | 3.55 |
| 1 | 8.68 | 6.95 | 9.28 | 15.15 |
| 2 | 24.13 | 27.78 | 38.75 | 56.50 |
| 3 | 55.00 | 70.50 | 136.00 | 325.00 |
| 4 | 118.50 | 178.50 | 490.00 | 598.00 |
| 5 | 240.00 | 366.30 | 660.00 | 1,530.00 |
| 6 | 417.00 | 541.30 | 1,113.00 | 2,293.00 |
| 7 | 597.50 | 1,048.00 | 1,738.00 | |
| 8 | 817.50 | 1,310.00 | 2,435.00 | |
| 9 | 1,060.00 | 1,733.00 | | |
| 10 | 1313.00 | 2,200.00 | | |

As shown in Table 10, increasing 1,3-BG content was found to correspond to a more rapid buildup of viscosity.

## Claims

1. A reactive polyurethane prepolymer composition comprising
(a) a first polyurethane prepolymer which is the reaction product of the reaction of methylene diphenyl diisocyanate (MDI) with poly(1,6-hexamethylene adipate) glycol (PHAG) with a molecular weight (Mw) of 500 g/mol to 10,000 g/mol and with an NCO content of 0.5 wt% to 7 wt%, preferably of 3 wt% to 7 wt% and more preferably of 5 wt% to 7wt%, comprising less than 0.1 wt% free MDI monomer based on the total weight of the first polyurethane prepolymer,
(b) a second polyurethane prepolymer which is the reaction product of the reaction of methylene diphenyl diisocyanate (MDI) with polypropylene glycol (PPG) or a succinic acid based polyester polyol with a molecular weight (Mw) of 250 g/mol to 4,000 g/mol and with an NCO content of 0.5 wt% to 12 wt%, preferably of 3 wt% to 11 wt% and more preferably of 5 wt% to 10 wt%, comprising less than 0.1 wt% free MDI monomer based on the total weight of the second polyurethane prepolymer and, optionally further comprising one or more short-chain polyols and
(c) optionally one or more catalysts.

2. The polyurethane prepolymer composition according to claim 1, wherein the methylene diphenyl diisocyanate (MDI) is 2,4'-methylene diphenyl diisocyanate, 4,4'-methylene diphenyl diisocyanate or mixtures thereof, preferably 4,4'-methylene diphenyl diisocyanate.

3. The polyurethane prepolymer composition according to claim 1 or 2, wherein poly(1,6-hexamethylene adipate) glycol of the first polyurethane prepolymer has a molecular weight (Mw) of 1,000 g/mol to 3,500 g/mol.

4. The polyurethane prepolymer composition according to any of claims 1 to 3, wherein the polyol of the second polyurethane prepolymer has a molecular weight (Mw) of 500 g/mol to 2,000 g/mol.

5. The polyurethane prepolymer composition according to any of claims 1 to 4, wherein the polyol of the second polyurethane prepolymer is polypropylene glycol (PPG).

6. The polyurethane prepolymer composition according to any of claims 1 to 5, wherein the reactive polyurethane prepolymer composition has a total NCO content of 5 wt% or less, preferably 3 wt% or less, more preferably 2 wt% or less and even more preferably 1 wt% or less based on the total weight of the prepolymers.

7. The polyurethane prepolymer composition according to any of claims 1 to 6, wherein the polyurethane prepolymer composition comprises a catalyst which is 4,4'-(Oxydi-2, 1-ethanediyl)bismorpholine (DMDEE).

8. The polyurethane prepolymer composition according to any of claims 1 to 7, wherein the polyurethane prepolymer composition comprises one or more catalysts in the amount of 0.1 pph to 1.0 pph, preferably 0.15 pph to 0.25 pph.

9. The polyurethane prepolymer composition according to any of claims 1 to 8, wherein the polyurethane prepolymer composition comprises one or more short-chain polyols which are linear or branched diols having 2 to 10, preferably 3 to 9 carbon atoms, more preferably selected from the group consisting of ethylene glycol, diethylene glycol, 1,2-propanediol, 1,3-propanediol, butanediol, dipropylene glycol, triethylene glycol, tripropylene glycol (TPG) and 1,6-hexanediol.

10. The polyurethane prepolymer composition according to any of claims 1 to 9, further comprising a curative, preferably a polyol or polyamine, more preferably a diol or a triol and most preferably polypropylene glycol triol (PPG triol).

11. A process for producing a reactive polyurethane prepolymer composition according to any of claim 1 to 10, comprising the steps of:
(i) providing a first polyurethane prepolymer which is the reaction product of the reaction of MDI with poly(1,6-hexamethylene adipate) glycol with a molecular weight (Mw) of 500 g/mol to 10,000 g/mol and with an NCO content of 0.5 wt% to 7 wt%, preferably of 3 wt% to 7wt% and more preferably of 5 wt% to 7 wt%, comprising less than 0.1 wt% free MDI based on the total weight of the first polyurethane prepolymer,
(ii) providing a second polyurethane prepolymer which is the reaction product of the reaction of methylene diphenyl diisocyanate (MDI) with polypropylene glycol (PPG) or a succinic acid based polyester polyol with a molecular weight (Mw) of 250 g/mol to 4,000 g/mol and with an NCO content of 0.5wt% to 12 wt%, preferably of 3 wt% to 11 wt% and more preferably of 5 wt% to 10 wt%, comprising less than 0.1 wt% free MDI based on the total weight of the second polyurethane prepolymer, and optionally further comprising a short-chain polyol, and
(iii) combining the first and second polyurethane prepolymer provided in step (i) and step (ii), optionally in the presence of one or more catalysts,
whereas step (i) and (ii) are performed in any order independently of each other.

12. A method for adhesively joining or sealing two substrates, comprising the steps of:
(1) applying onto a substrate the reactive polyurethane prepolymer composition according to any of claims 1 to 10, and
(2) contacting the reactive polyurethane prepolymer composition applied on the substrate of step (1) to a second substrate such that a bond is formed.

13. Use of the reactive polyurethane prepolymer composition according to any of claims 1 to 10 as an adhesive, preferably as an hot melt adhesive.

14. A reactive polyurethane prepolymer which is the reaction product of the reaction of methylene diphenyl diisocyanate (MDI) with succinic acid based polyester polyol with a molecular weight (Mw) of 250 g/mol to 4,000 g/mol and a short-chain polyol with an NCO content of 0.5 wt% to 12 wt%, preferably of 3 wt% to 11 wt% and more preferably of 5 wt% to 10 wt%, comprising less than 0.1 wt% free MDI based on the total weight of the polyurethane prepolymer.

15. A reactive polyurethane prepolymer according to claim 14, wherein the short-chain polyol is 1,3-butylene glycol

## Patentansprüche

1. Reaktive Polyurethanprepolymerzusammensetzung, umfassend
(a) ein erstes Polyurethanprepolymer, bei dem es sich um das Umsetzungsprodukt der Umsetzung von Methylendiphenyldiisocyanat (MDI) mit Poly(1,6-hexamethylenadipat)glykol (PHAG) mit einem Molekulargewicht (Mw) von 500 g/mol bis 10.000 g/mol und mit einem NCO-Gehalt von 0,5 Gew.-% bis 7 Gew.-%, vorzugsweise von 3 Gew.-% bis 7 Gew.-% und weiter bevorzugt von 5 Gew.-% bis 7 Gew.-% handelt, das weniger als 0,1 Gew.% freies MDI-Monomer, bezogen auf das Gesamtgewicht des ersten Polyurethanprepolymers, umfasst,
(b) ein zweites Polyurethanprepolymer, bei dem es sich um das Umsetzungsprodukt der Umsetzung von Methylendiphenyldiisocyanat (MDI) mit Polypropylenglykol (PPG) oder einem Polyesterpolyol auf Basis von Bernsteinsäure mit einem Molekulargewicht (Mw) von 250 g/mol bis 4000 g/mol und mit einem NCO-Gehalt von 0,5 Gew.-% bis 12 Gew.-%, vorzugsweise von 3 Gew.% bis 11 Gew.-% und weiter bevorzugt von 5 Gew.-% bis 10 Gew.-% handelt, das weniger als 0,1 Gew.-% freies MDI-Monomer, bezogen auf das Gesamtgewicht des zweiten Polyurethanprepolymers, umfasst und gegebenenfalls ferner ein oder mehrere kurzkettige Polyole umfasst, und
(c) gegebenenfalls einen oder mehrere Katalysatoren.

2. Polyurethanprepolymerzusammensetzung nach Anspruch 1, wobei es sich bei dem Methylendiphenyldiisocyanat (MDI) um 2,4'-Methylendiphenyldiisocyanat, 4,4'-Methylendiphenyldiisocyanat oder Mischungen davon, vorzugsweise 4,4'-Methylendiphenyldiisocyanat, handelt.

3. Polyurethanprepolymerzusammensetzung nach Anspruch 1 oder 2, wobei das Poly(1,6-hexamethylenadipat)glykol des ersten Polyurethanprepolymers ein Molekulargewicht (Mw) von 1000 g/mol bis 3500 g/mol aufweist.

4. Polyurethanprepolymerzusammensetzung nach einem der Ansprüche 1 bis 3, wobei das Polyol des zweiten Polyurethanprepolymers ein Molekulargewicht (Mw) von 500 g/mol bis 2000 g/mol aufweist.

5. Polyurethanprepolymerzusammensetzung nach einem der Ansprüche 1 bis 4, wobei es sich bei dem Polyol des zweiten Polyurethanprepolymers um Polypropylenglykol (PPG) handelt.

6. Polyurethanprepolymerzusammensetzung nach einem der Ansprüche 1 bis 5, wobei die reaktive Polyurethanprepolymerzusammensetzung einen NCO-Gesamtgehalt von 5 Gew.-% oder weniger, vorzugsweise 3 Gew.-% oder weniger, weiter bevorzugt 2 Gew.-% oder weniger und noch weiter bevorzugt 1 Gew.-% oder weniger, bezogen auf das Gesamtgewicht der Prepolymere, aufweist.

7. Polyurethanprepolymerzusammensetzung nach einem der Ansprüche 1 bis 6, wobei die Polyurethanprepolymerzusammensetzung einen Katalysator enthält, bei dem es sich um 4,4'-(Oxydi-2,1-ethandiyl)bismorpholin (DMDEE) handelt.

8. Polyurethanprepolymerzusammensetzung nach einem der Ansprüche 1 bis 7, wobei die Polyurethanprepolymerzusammensetzung einen oder mehrere Katalysatoren in der Menge von 0,1 pph bis 1,0 pph, vorzugsweise 0,15 pph bis 0,25 pph, umfasst.

9. Polyurethanprepolymerzusammensetzung nach einem der Ansprüche 1 bis 8, wobei die Polyurethanprepolymerzusammensetzung ein oder mehrere kurzkettige Polyole umfasst, bei denen es sich um lineare oder verzweigte Diole mit 2 bis 10 und vorzugsweise 3 bis 9 Kohlenstoffatomen handelt, die weiter bevorzugt aus der Gruppe bestehend aus Ethylenglykol, Diethylenglykol, 1,2-Propandiol, 1,3-Propandiol, Butandiol, Dipropylenglykol, Triethylenglykol, Tripropylenglykol (TPG) und 1,6-Hexandiol ausgewählt sind.

10. Polyurethanprepolymerzusammensetzung nach einem der Ansprüche 1 bis 9, ferner umfassend einen Härter, vorzugsweise ein Polyol oder Polyamin, weiter bevorzugt ein Diol oder ein Triol und ganz besonders bevorzugt Polypropylenglykoltriol (PPG-Triol).

11. Verfahren zur Herstellung einer reaktiven Polyurethanprepolymerzusammensetzung nach einem der Ansprüche 1 bis 10, umfassend die Schritte:
(i) Bereitstellen eines ersten Polyurethanprepolymers, bei dem es sich um das Umsetzungsprodukt der Umsetzung von MDI mit Poly(1,6-hexamethylenadipat)glykol mit einem Molekulargewicht (Mw) von 500 g/mol bis 10.000 g/mol und mit einem NCO-Gehalt von 0,5 Gew.-% bis 7 Gew.-%, vorzugsweise von 3 Gew.-% bis 7 Gew.-% und weiter bevorzugt von 5 Gew.-% bis 7 Gew.-% handelt, das weniger als 0,1 Gew.-% freies MDI-Monomer, bezogen auf das Gesamtgewicht des ersten Polyurethanprepolymers, umfasst,
(ii) Bereitstellen eines zweiten Polyurethanprepolymers, bei dem es sich um das Umsetzungsprodukt der Umsetzung von Methylendiphenyldiisocyanat (MDI) mit Polypropylenglykol (PPG) oder einem Polyesterpolyol auf Basis von Bernsteinsäure mit einem Molekulargewicht (Mw) von 250 g/mol bis 4000 g/mol und mit einem NCO-Gehalt von 0,5 Gew.-% bis 12 Gew.%, vorzugsweise von 3 Gew.-% bis 11 Gew.-% und weiter bevorzugt von 5 Gew.-% bis 10 Gew.-% handelt, das weniger als 0,1 Gew.-% freies MDI-Monomer, bezogen auf das Gesamtgewicht des zweiten Polyurethanprepolymers, umfasst und gegebenenfalls ferner ein kurzkettiges Polyol umfasst, und
(iii) Vereinigen des in Schritt (i) und Schritt (ii) bereitgestellten ersten und zweiten Polyurethanprepolymers, gegebenenfalls in Gegenwart eines oder mehrerer Katalysatoren,
wobei die Schritte (i) und (ii) in einer beliebigen Reihenfolge unabhängig voneinander durchgeführt werden.

12. Verfahren zum klebenden Verbinden oder Versiegeln von zwei Substraten, umfassend die Schritte:
(1) Aufbringen der reaktiven Polyurethanprepolymerzusammensetzung nach einem der Ansprüche 1 bis 10 auf ein Substrat und
(2) Inkontaktbringen der auf das Substrat von Schritt (1) aufgebrachten reaktiven Polyurethanprepolymerzusammensetzung auf ein zweites Substrat derart, dass eine Bindung gebildet wird.

13. Verwendung der reaktiven Polyurethanprepolymerzusammensetzung nach einem der Ansprüche 1 bis 10 als ein Klebstoff, vorzugsweise als ein Schmelzklebstoff.

14. Reaktives Polyurethanprepolymer, bei dem es sich um das Umsetzungsprodukt der Umsetzung von Methylendiphenyldiisocyanat (MDI) mit einem Polyesterpolyol auf Basis von Bernsteinsäure mit einem Molekulargewicht (Mw) von 250 g/mol bis 4000 g/mol und einem kurzkettigen Polyol mit einem NCO-Gehalt von 0,5 Gew.-% bis 12 Gew.-%, vorzugsweise von 3 Gew.-% bis 11 Gew.-% und weiter bevorzugt von 5 Gew.-% bis 10 Gew.-% handelt, das weniger als 0,1 Gew.-% freies MDI-Monomer, bezogen auf das Gesamtgewicht des Polyurethanprepolymers, umfasst.

15. Reaktives Polyurethanprepolymer nach Anspruch 14, wobei es sich bei dem kurzkettigen Polyol um 1,3-Butylenglykol handelt.

## Revendications

1. Composition de prépolymère de polyuréthane réactif comprenant
(a) un premier prépolymère de polyuréthane qui est le produit de réaction de la réaction de diisocyanate de diphénylméthylène (MDI) avec un poly(adipate de 1,6-hexaméthylène) glycol (PHAG) doté d'un poids moléculaire (Mw) de 500 g/mole à 10 000 g/mole et doté d'une teneur en NCO de 0,5 % en poids à 7 % en poids, préférablement de 3 % en poids à 7 % en poids et plus préférablement de 5 % en poids à 7 % en poids, comprenant moins de 0,1 % en poids de monomère de MDI libre sur la base du poids total du premier prépolymère de polyuréthane,
(b) un deuxième prépolymère de polyuréthane qui est le produit de réaction de la réaction de diisocyanate de diphénylméthylène (MDI) avec un polypropylèneglycol (PPG) ou un polyester polyol à base d'acide succinique doté d'un poids moléculaire (Mw) de 250 g/mole à 4 000 g/mole et doté d'une teneur en NCO de 0,5 % en poids à 12 % en poids, préférablement de 3 % en poids à 11 % en poids et plus préférablement de 5 % en poids à 10 % en poids, comprenant moins de 0,1 % en poids de monomère de MDI libre sur la base du poids total du deuxième prépolymère de polyuréthane et, éventuellement comprenant en outre un ou plusieurs polyols à chaîne courte et
(c) éventuellement un ou plusieurs catalyseurs.

2. Composition de prépolymère de polyuréthane selon la revendication 1, le diisocyanate de diphénylméthylène (MDI) étant le 2,4'-diisocyanate de diphénylméthylène, le 4,4'-diisocyanate de diphénylméthylène ou des mélanges correspondants, préférablement le 4,4'-diisocyanate de diphénylméthylène.

3. Composition de prépolymère de polyuréthane selon la revendication 1 ou 2, le poly(adipate de 1,6-hexaméthylène) glycol du premier prépolymère de polyuréthane ayant un poids moléculaire (Mw) de 1 000 g/mole à 3 500 g/mole.

4. Composition de prépolymère de polyuréthane selon l'une quelconque des revendications 1 à 3, le polyol du deuxième prépolymère de polyuréthane ayant un poids moléculaire (Mw) de 500 g/mole à 2 000 g/mole.

5. Composition de prépolymère de polyuréthane selon l'une quelconque des revendications 1 à 4, le polyol du deuxième prépolymère de polyuréthane étant un polypropylèneglycol (PPG).

6. Composition de prépolymère de polyuréthane selon l'une quelconque des revendications 1 à 5, la composition de prépolymère de polyuréthane réactif ayant une teneur totale en NCO de 5 % en poids ou moins, préférablement de 3 % en poids ou moins, plus préférablement de 2 % en poids ou moins et encore plus préférablement de 1 % en poids ou moins sur la base du poids total des prépolymères.

7. Composition de prépolymère de polyuréthane selon l'une quelconque des revendications 1 à 6, la composition de prépolymère de polyuréthane comprenant un catalyseur qui est la 4,4'-(oxydi-2,1-éthanediyl)bismorpholine (DMDEE).

8. Composition de prépolymère de polyuréthane selon l'une quelconque des revendications 1 à 7, la composition de prépolymère de polyuréthane comprenant un ou plusieurs catalyseurs en la quantité de 0,1 pph à 1,0 pph, préférablement 0,15 pph à 0,25 pph.

9. Composition de prépolymère de polyuréthane selon l'une quelconque des revendications 1 à 8, la composition de prépolymère de polyuréthane comprenant un ou plusieurs polyols à chaîne courte qui sont des diols linéaires ou ramifiés ayant 2 à 10, préférablement 3 à 9 atomes de carbone, plus préférablement choisis dans le groupe constitué par l'éthylène glycol, le diéthylèneglycol, le 1,2-propanediol, le 1,3-propanediol, le butanediol, le dipropylèneglycol, le triéthylèneglycol, le tripropylèneglycol (TPG) et le 1,6-hexanediol.

10. Composition de prépolymère de polyuréthane selon l'une quelconque des revendications 1 à 9, comprenant en outre un agent de durcissement, préférablement un polyol ou une polyamine, plus préférablement un diol ou un triol et le plus préférablement un polypropylèneglycol triol (PPG triol).

11. Procédé pour la production d'une composition de prépolymère de polyuréthane réactif selon l'une quelconque des revendications 1 à 10, comprenant les étapes de :
(i) fourniture d'un premier prépolymère de polyuréthane qui est le produit de réaction de la réaction de MDI avec un poly(adipate de 1,6-hexaméthylène) glycol doté d'un poids moléculaire (Mw) de 500 g/mole à 10 000 g/mole et doté d'une teneur en NCO de 0,5 % en poids à 7 % en poids, préférablement de 3 % en poids à 7 % en poids et plus préférablement de 5 % en poids à 7 % en poids, comprenant moins de 0,1 % en poids de MDI libre sur la base du poids total du premier prépolymère de polyuréthane,
(ii) fourniture d'un deuxième prépolymère de polyuréthane qui est le produit de réaction de la réaction de diisocyanate de diphénylméthylène (MDI) avec un polypropylèneglycol (PPG) ou un polyester polyol à base d'acide succinique doté d'un poids moléculaire (Mw) de 250 g/mole à 4 000 g/mole et doté d'une teneur en NCO de 0,5 % en poids à 12 % en poids, préférablement de 3 % en poids à 11 % en poids et plus préférablement de 5 % en poids à 10 % en poids, comprenant moins de 0,1 % en poids de MDI libre sur la base du poids total du deuxième prépolymère de polyuréthane et, éventuellement comprenant en outre un polyol à chaîne courte, et
(iii) combinaison du premier et du deuxième prépolymère de polyuréthane fournis dans l'étape (i) et l'étape (ii), éventuellement en la présence d'un ou plusieurs catalyseurs,
l'étape (i) et l'étape (ii) étant réalisées dans n'importe quel ordre indépendamment l'une de l'autre.

12. Procédé de jointure de manière adhésive ou de scellement de deux substrats, comprenant les étapes de :
(1) application sur un substrat de la composition de prépolymère de polyuréthane réactif selon l'une quelconque des revendications 1 à 10, et
(2) mise en contact de la composition de prépolymère de polyuréthane réactif appliquée sur le substrat de l'étape (1) avec un deuxième substrat de sorte qu'une liaison soit formée.

13. Utilisation de la composition de prépolymère de polyuréthane réactif selon l'une quelconque des revendications 1 à 10 en tant qu'adhésif, préférablement en tant qu'adhésif thermofusible.

14. Prépolymère de polyuréthane réactif qui est le produit de réaction de la réaction de diisocyanate de diphénylméthylène (MDI) avec un polyester polyol à base d'acide succinique doté d'un poids moléculaire (Mw) de 250 g/mole à 4 000 g/mole et un polyol à chaîne courte doté d'une teneur en NCO de 0,5 % en poids à 12 % en poids, préférablement de 3 % en poids à 11 % en poids et plus préférablement de 5 % en poids à 10 % en poids, comprenant moins de 0,1 % en poids de MDI libre sur la base du poids total du prépolymère de polyuréthane.

15. Prépolymère de polyuréthane réactif selon la revendication 14, le polyol à chaîne courte étant le 1,3-butylèneglycol.
